# EUROPÄISCHE PATENTSCHRIFT

(11) **EP 1 768 935 B1**
(45) Veröffentlichungstag und Bekanntmachung des Hinweises auf die Patenterteilung: **18.05.2011**
(21) Anmeldenummer: 05751710.4
(22) Anmeldetag: 15.06.2005
(51) Int. Cl.: C03B 33/02, C03B 33/03

(54) **VERFAHREN ZUM DURCHTRENNEN VON PLATTEN AUS MECHANISCH SPRÖDEN UND NICHTMETALLISCHEN WERKSTOFFEN**
METHOD FOR CUTTING THROUGH PLATES MADE OF MECHANICALLY BRITTLE AND NON-METALLIC MATERIALS
PROCEDE POUR SECTIONNER DES PLAQUES EN MATIERES MECANIQUEMENT FRAGILES ET NON METALLIQUES

(30) Priorität: 21.07.2004 DE 102004035342
(43) Veröffentlichungstag der Anmeldung: 04.04.2007
(73) Patentinhaber: Schott AG, 55122 Mainz (DE)
(72) Erfinder: HABECK, Andreas, 55257 Budenheim (DE); SEIBERT, Volker, 65239 Hochheim (DE); MARKSCHLÄGER, Patrick, White plains, 10605 NY (US)
(74) Vertreter: Sawodny, Michael-Wolfgang
(86) Internationale Anmeldenummer: PCT/EP2005/006389
(87) Internationale Veröffentlichungsnummer: WO 2006/007907

(56) Entgegenhaltungen:
- EP-A- 1 422 201
- WO-A-01/98368
- SU-A- 958 346
- SU-A- 996 347
- US-A- 3 116 862
- US-A- 3 532 260
- "Sheet glass cutting process to produce blanks - using vibrations of amplitude of 0.3-0.5 mm at frequency of 100 Hz" WPI DERWENT, 1983, XP002006483
- "Glass panels cutter - by placing acoustic vibrations exciter away from scoring line where antinodes are aligned" WPI DERWENT, 1983, XP002006484

## Beschreibung

Die Erfindung betrifft das splitterarme und präzise Schneiden bzw. Durchtrennen von plattenförmigen Werkstücken aus mechanisch spröden und nichtmetallischen Werkstoffen, wie zum Beispiel von Glasscheiben.

Das Standardverfahren zum Schneiden bzw. Durchtrennen von plattenförmigen Werkstücken aus nichtmetallischen und insbesondere spröden Werkstoffen ist das "Ritzen und Brechen". Dabei wird mit einem Ritzwerkzeug ein als Sollbruchstelle wirkender Anritz in der Oberfläche des Werkstücks erzeugt und das Werkstück anschließend durch Biegen mechanisch gebrochen. Die Nachteile dieses Verfahrens liegen besonders im Brechen, da der Bruch zum einen aufgrund seiner hohen Geschwindigkeit wenig kontrollierbar ist, zum anderen beim Biegen im allgemeinen wesentlich mehr elastische Energie vom Werkstück gespeichert wird als zum Erzeugen der Schnittkante erforderlich ist. Diese Überschussenergie kann zu unkontrollierten Brüchen mit beispielsweise Aussplitterungen bzw. Ausmuschelungen der Schnittkante führen. Des weiteren entsteht durch die Biegung auf der Anritz-abgewandten Seite des plattenförmigen Werkstückes eine Druckspannungszone, in die der Bruch zwangsläufig gerät. Die Bruchfront dreht sich dabei regelmäßig aus der Schnittkante heraus. Die Folge sind eine unregelmäßige Schnittkante mit Ausmuschelungen und Lanzettrissen sowie eine starke Splitterneigung.

Bei den Standardverfahren in der Glasindustrie werden die als Sollbruchstellen dienenden Anritze mit Hartkörpern wie Diamanten oder Hartmetallrädchen erzeugt. Alternativ hierzu können gemäß der DE 35 37 434 A1, DE 43 00 730 C1, DE 42 14 159 C1 und DE 1 971 661 6C2 mittels Laserstrahlen Sollbruchstellen in Glaskörper erzeugt werden.

Die Offenlegungsschrift DE 197 15 537 und die Patentanmeldung EP 08 72 303 A2 beschreiben Verfahren und Vorrichtungen zum Durchtrennen von flachen plattenförmigen Werkstücken aus mechanisch spröden und Sprödmaterial mittels eines symmetrischen Wärmestrahlungsflecks, der eine erhöhte Strahlungsintensität in seinem Randbereich aufweist und entlang einer vorgegebenen Trennlinie bewegt wird und der bewegte Trennlinienabschnitt anschließend gekühlt wird. Diese Verfahren sind prinzipiell geeignet, Sprödmaterialien splitteram zu schneiden, jedoch aufwendig. Aus der WO 98/56722 ist ein Verfahren zum Brechen von Glasartikeln, bei dem mehrere Laserstrahlen verwendet werden, bekannt geworden. Die Europäische Patentanmeldung EP 08 39 597 A1 beschreibt ein Verfahren und die Auslegung der dazu geeigneten Vorrichtungen zum Schneiden von streifenförmigen Werkstücken aus Sprödmaterial. Dabei wird eine gepulste punktförmige Wärmequelle auf das Werkstück gerichtet und durch die so entstehenden thermo-mechanischen Spannungen ein das Werkstück trennender Riss entlang einer vorgebbaren Schnittkante "gezogen". Die Patentanmeldung EP 09 03 327 A2 beschreibt ein Verfahren zum Schneiden von nichtmetallischen Werkstoffen, bei dem ein plattenförmiges Werkstück auf der Unterseite durch ein linienförmiges Heizelement geheizt wird und zugleich auf der Oberseite durch Anblasen mit einem Kühlmittel gekühlt wird.

Nachteilig an den vorgenannten Verfahren ist, dass der Schnitt von einer Initialbruchstelle ausgehen muss, die in einem gesonderten Prozessschritt erzeugt werden muss. Diese Initialbruchstelle wird mit Hartkörpern wie z. B. Diamanten oder Hartmetallrädchen erzeugt. Die Positionierung der Initialbruchstelle bezüglich der Heiz-/Kühl-Zone muss dabei sehr genau sein. Ein weiterer Nachteil ist, dass die erzeugten thermo-mechanischen Spannungen gering sind und somit die Gefahr besteht, dass der Schnitt abbricht. Ein weiterer Nachteil ist, dass Platten zur Erzeugung ausreichender thermo-mechanischer Spannungen auf der gesamten Dicke durchwärmt und wieder abgekühlt werden müssen. Infolge der geringen Wärmeleitung in nichtmetallischen Werkstoffen wie zum Beispiel Glas erfordert das viel Zeit, d.h. die Schnittgeschwindigkeit ist sehr gering.

Aus SU-A-958346 und SU-A-996347 sind Schneidwerkzeuge für das Schneiden von Glas bekannt geworden, bei denen das Glas entlang einer Trennlinie angeritzt wurde und der Riss mittels akustischer Wellen getrennt wurde.

In der US-A-2002/0006765 ist das Durchtrennen von Glasscheiben mittels Laser bekannt geworden.

Die Erfindung hat die Aufgabe, ein Verfahren zum Trennen von plattenförmigen Werkstücken aus mechanisch spröden und nichtmetallischen Werkstoffen zu schaffen, das ein splitterarmes Trennen zulässt und eine präzise Steuerung der vertikalen Schnittkontur erlaubt. Des Weiteren soll das Durchtrennen mit einfachen Mitteln und einer ausreichenden Geschwindigkeit erfolgen.

Erfindungsgemäß wird diese Aufgabe dadurch gelöst, dass das mit einem durchgehenden Anritz versehene und zu durchtrennende plattenförmige Werkstück zu Biegeschwingungen mit einer Schwingungsamplitude entlang einer Trennlinie angeregt wird, so dass entlang der Trennlinie das plattenförmige Werkstück vollständig durchtrennt wird. Die Biegeschwingungen können bevorzugt durch einen Schwingungsgeber angeregt werden, so dass der Trennvorgang mittels einer zyklischen Lasteinleitung erfolgt. Der Schwingungsgeber, der an geeigneter Position auf beispielsweise einer geritzten Glasplatte aufliegt und ankoppelt, regt die Platte zu Schwingungen bei ihren Eigenfrequenzen an. Bei geeigneter Lagerung der Platte und bei geeigneten Schwingungsfrequenzen liegen die Amplitudenmaxima im Bereich der Anritzspuren und führen zu einer zyklischen Zugbelastung senkrecht zu dieser. Hierdurch werden die Anritzspuren differentiell senkrecht zur Glasoberfläche aufgeweitet, ein katastrophaler und schlagartiger Durchbruch wird durch einen kontinuierlichen Rissfortschritt ersetzt. Besonders bevorzugt wird das Verfahren gemäß der Erfindung bei der Herstellung von Glassubstraten für Speichermedien, sogenannten Harddiscs, zum schallinduzierten Brechen verwandt. Mit dem erfindungsgemäßen Verfahren ist es möglich, den Anriss in einem Harddisc (HD)-Rohling durch eine ebene Glasplatte derart hindurchzutreiben, dass die Harddisc schadensfrei aus dem Glasrohling gelöst werden kann und kein weiterer Bearbeitungsschritt wie zum Beispiel eine nachträgliche Kantenbearbeitung des inneren und des äußeren Randes notwendig werden.

Nachfolgend soll die Erfindung anhand der Ausführungsbeispiele beschrieben werden. Es zeigen:
- Figur 1: Schnitt durch ein Glassubstrat für elektronische Speichermedien, das gemäß dem Stand der Technik gebrochen wurde
- Figur 2a: die Schwingungsmoden zum Heraustrennen des Innendurchmessers
- Figur 2b: die Schwingungsmoden zum Heraustrennen des Außendurchmessers

Die Erfindung soll anhand einer speziellen Anwendung, nämlich der Herstellung von Glassubstraten für elektronische Speichermedien beschrieben werden, ohne jedoch hierauf beschränkt zu sein.

Generell besteht der Prozess der Vereinzelung eines Harddisc (HD)-GlasRohling aus einer ebenen Glasplatte aus drei voneinander unabhängigen Prozessschritten:
1. dem Anritzen mit einem geeigneten Schneidwerkzeug wie Diamant, Schneidrad oder Laser
2. Brechen bzw. Durchtreiben des Initialanrisses durch den gesamten Rohling hindurch
3. Trennen des HD-Rohlings aus der Glasplatte unter der Einwirkung zentral auf die Glasplatte einwirkender mechanischer Lasten und thermischer Gradienten.

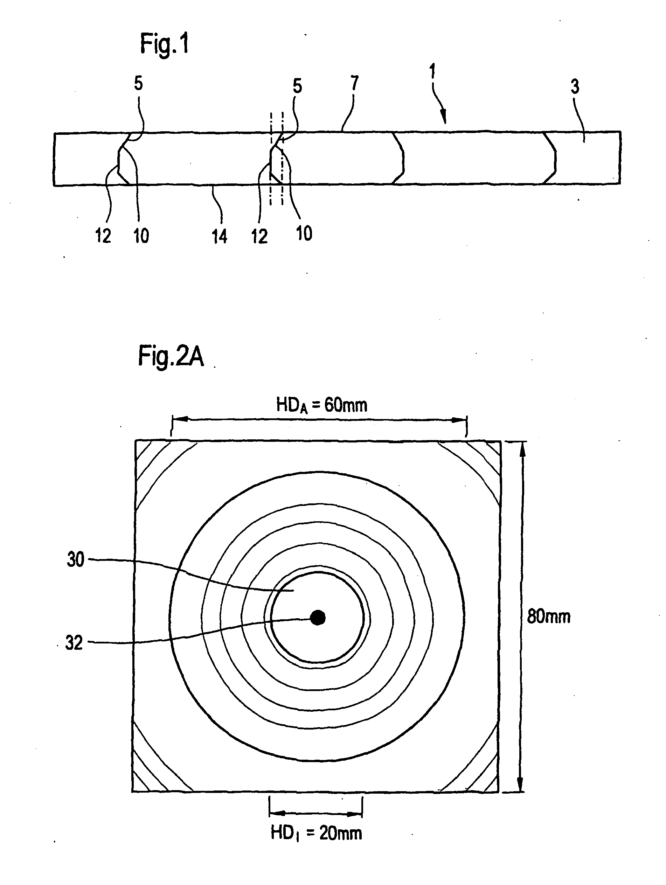

In Figur 1 ist ein HD-Rohling 1, der aus einer Glasplatte 3 mittels konventioneller Technik vereinzelt wird, dargestellt.

Aufgrund der Geometrie der ebenen Glasplatten 3 und dem aus diesem resultierenden Spannungsprofil während des Anritzens werden im ersten Prozessschritt kreisförmige Anritze 5 erzeugt, die typischerweise nicht senkrecht zur Glasoberfläche 7 verlaufende Initialanrisse zur Folge haben. Die Initialanrisse 10 zeigen einen Versatz von 20 bis 30 µm, die zur Plattenaußenseite orientiert sind. Die in diesem Prozessschritt entstandenen Oberflächen- und Volumenschädigungen stellen eine Sollbruchstelle des Glases dar.

Im zweiten Prozessschritt werden die im ersten Prozessschritt erzeugten Sollbruchstellen über eine symmetrische Krafteinleitung bei einer geeigneten Abstützung der Glasplatte unter Zugspannung beansprucht. Die Initialrisse 10 werden dabei möglichst kontrolliert durch die Glasplatte geführt. Typisch ist ein in der Plattenmitte senkrecht zur Oberfläche verlaufender Bruch 12, der im Bereich des Rissaustritts auf der dem Anritz gegenüberliegenden Plattenseite 14 wieder um 20 bis 30 µm, diesmal jedoch nach innen, abwinkelt. Aus dem Standardbrechverfahren resultieren tonnenförmige Geometrien der Harddisc.

Im dritten Prozessschritt werden die HD-Rohlings über einen Biegeprozess aus der Glasplatte unter der Einwirkung zentral einwirkender mechanischer Last vereinzelt. Zur Unterstützung des Vereinzelungsprozesses wird die im zweiten Prozessschritt ausgebrochene HD mit geeigneten Kühlmitteln abgekühlt, da eine zylinderförmige Struktur mit den genannten geometrischen Abweichungen grundsätzlich nicht beschädigungsfrei aus einer Glasplatte vereinzelt werden kann.

Glas ist ein mechanisch spröder Werkstoff und hat eine relativ niedrige thermische Ausdehnung von typischerweise 3,5-11 ppm/K. Werden für den Prozess handelsübliche Geometrien von 2,5"-HD zugrunde gelegt, lassen sich mit handelsüblichen Kühlmitteln (z.B. N₂), vollständige Kühlung der ausgebrochenen HD vorausgesetzt, maximale geometrische Toleranzen von 50 bis 60 µm ausgleichen. Der Vereinzelungsvorgang des beschriebenen Prozesses ist somit zwingend mit einer mechanischen Berührung der HD-Rohlingskanten mit dem Glasträger verbunden. Als Folge dieser Berührung treten Kantenausbrüche auf. Die Kantenausbrüche erfordern einen weiteren Bearbeitungsschritt wie zum Beispiel eine nachträgliche Kantenbearbeitung des inneren und des äußeren Randes.

Mit dem erfindungsgemäßen Verfahren ist es möglich, diese Nachteile zu vermeiden und einen definierten Rissfortschritt ohne Versatz senkrecht zur Glasplattenoberfläche zu erreichen. Hieraus resultiert eine geeignete zylinder- oder geringfügig kegelförmige Kontur des inneren und des äußeren HD-Randes aus dem Brechvorgang, der ein schadenfreies Trennen der HD aus dem Glassubstrat ermöglicht.

Standardbrechverfahren basieren darauf, die physikalische Grenze der Festigkeit eines Materials, gekennzeichnet durch die Risszähigkeit K_{1C}, zu überschreiten, was zu einem schlagartigen, katastrophalen Bruch entlang vorgegebener Anrisslinien führt. Der mathematische Zusammenhang der für den Bruch relevanten Werte ist durch das Risskriterium des K-Konzeptes gegeben. Darin bedeuten σ die mechanische Spannung, a die Anrisstiefe und C₀ eine Konstante.
K₁ = C₀·σ·a für K₁≥ K_{1C} erfolgt Bruch

Das Erreichen von K_{1C} zum Beispiel durch einen Biegevorgang hat ein schlagartiges Freisetzen der gespeicherten elastischen Energie zur Folge, mit den nicht erwünschten Begleiterscheinungen unkontrollierbaren Rissfortschritt und Beschädigung der Glaskanten.

Die Erfinder haben nun erkannt, dass um einen Anriss durch ein sprödes Material wie Glas zu erweitern, es grundsätzlich nicht notwendig ist, K_{1C} zu überschreiten. Unter Einwirkung von Spannungen wachsen Risse im Glas auch langsam. Dies wird physikalisch als Spannungsrisskorrosion bezeichnet. Das Risswachstum im Glas kann, abhängig von der Höhe der mechanisch aufgebrachten Lasten und der Zeitdauer der Lasteinwirkung, definiert gesteuert werden.

Gemäß der Erfindung erfolgt das Trennen durch die Anregung des plattenförmigen Werkstückes zu Biegeschwingungen, mit denen ein in das Glas eingebrachter Anriss definiert durch das Glas hindurchgetrieben wird.

Die zyklische Lasteinleitung kann beispielsweise via Schallgeber erfolgen. Der Schallgeber, der an geeigneter Position auf der geritzten Glasplatte aufliegt und ankoppelt, regt die Glasplatte zu Schwingungen bei ihren Eigenfrequenzen an. Bei geeigneter Lagerung der Glasplatte und bei geeigneten Schwingungsfrequenzen liegen die Amplitudenmaxima im Bereich der Anritzspuren und führen zu einer zyklischen Zugbelastung senkrecht zu diesen. Die Anritzspuren werden dann differentiell senkrecht zur Glasoberfläche aufgeweitet, so dass ein kontinuierlicher Rissfortschritt erfolgt.

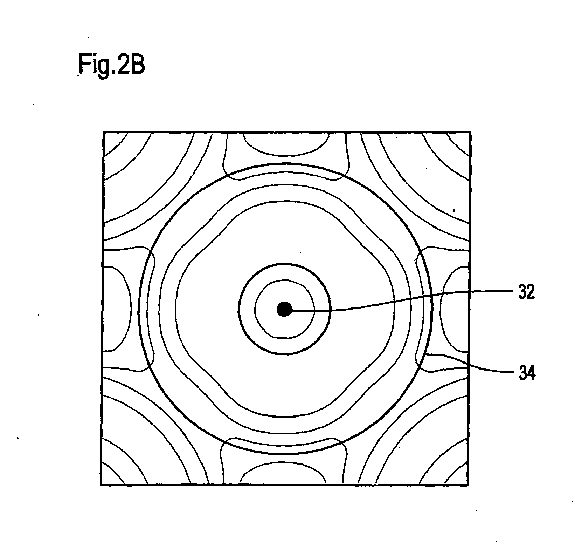

In den Figuren 2a und 2b sind die Schwingungsmoden zum Heraustrennen des Innendurchmessers und der gesamten Harddisc mit einem Außendurchmesser aus einer Glasplatte gezeigt. Die nachfolgenden Materialdaten wurden der Schwingungsanalyse für eine handelsübliche 2,5"-Harddisc zugrunde gelegt:

| | |
|---|---|
| E-Modul: | 72.9 GPa |
| Querkontraktionszahl: | 0.21 |
| Dichte: | 2505 kg/m³ |

Die Geometriedaten waren wie folgt:

| | |
|---|---|
| Glasdicke d: | 0,7 mm |
| Glasplattenaußenrand | |
| einer quadratischen Glasplatte: | 80 mm x 80 mm |
| HD-Innenrand-Ø HD_{I} | 20 mm |
| HD-Außenrand -Ø HD_{A} | 65 mm |

Die Glasplatte, aus der die Harddisc herausgebrochen werden sollte, wurde konzentrisch eingespannt. Der Durchmesser des Lagers, auf dem die Glasplatte beispielsweise eingespannt wurde, betrug D_{Lager} = 60 mm.

In der Figur 2a ist die Biegeeigenschwingungsform bei einer sinusförmigen (harmonischen) Anregung von 650 Hz für ein plattenförmiges Werkstück dargestellt. In der Mitte (32) des plattenförmigen Werkstücks ist der Anregungsort für einen geeigneten Schwingungsgeber skizziert. Sowohl auf der inneren als auch äußeren Trennlinie des plattenförmigen Werkstücks treten zyklische Schwingungsamplituden auf, die somit ebenfalls zyklische Zugspannungen in die zu trennenden Bereiche einleiten und zu einem differentiellen Rissfortschritt im Anritzbereich und zu einer Trennung des angeritzten Werkstücks entlang des Anrissbereichs führen.

In der Figur 2b ist als zweites Beispiel die Biegeeigenschwingungsform bei einer sinusförmigen (harmonischen) Anregung von 1640 Hz gezeigt. Auch in diem Fall werden sowohl die inneren als auch äußeren Trennlinien zyklisch zu Biegeschwingungen angeregt.

Mit dem erfindungsgemäßen Verfahren ist es möglich, beispielsweise gleichzeitig den Innen- und Außenradius einer Harddisc durch eine geeignete Anregung zu Eigenschwingungen aus einer Glasplatte ohne Beschädigungen an den Kanten herauszutrennen.

Die benötigten Amplituden für das Trennen gemäß dem erfindungsgemäßen Verfahren sind von den Randbedingungen, Geometriedaten und von den Materialdaten des zu trennenden Werkstoffes abhängig.

Die am Anriss angreifenden Biegespannungen werden über die Schwingungsamplituden des Schwingers derart eingestellt, dass diese Spannungen ein unterkritisches Risswachstum mit einer Rissgeschwindigkeit von bis zu 1 mm/s ermöglichen, so dass eine Trennung des Werkstoffs im wesentlichen senkrecht zur Oberfläche des Werkstücks erfolgt.

## Patentansprüche

1. Verfahren zum Durchtrennen von plattenförmigen Werkstücken mechanisch spröder und nichtmetallischer Werkstoffe entlang einer beliebigen Kontur, umfassend die nachfolgenden Schritte:
- Ritzen von Trennlinien entlang der Kontur bis zu einer Tiefe T mit Hilfe einer Schneideeinrichtung in mindestens eine Seite des plattenförmigen Werkstückes,
**dadurch gekennzeichnet, dass**
- das plattenförmige Werkstück zu Biegeschwingungen bei einer Eigenfrequenz mit einer Schwingungsamplitude entlang der Trennlinien mittels eines Schwingungsgebers angeregt wird, so dass
- entlang der Trennlinie das plattenförmige Werkstück vollständig durchtrennt wird,
- wobei die am Anriss angreifenden Biegespannungen über die Schwingungsamplituden des Schwingungsgebers derart eingestellt wird, dass diese Spannungen ein unterkritisches Risswachstum mit einer Rissgeschwindigkeit von bis zu 1 mm/s ermöglicht, so dass eine vollständige Trennung des Werkstoffs im Wesentlichen senkrecht zur Oberfläche des Werkstücks bewirkt wird und die Schwingungsamplitude im Bereich der Trennlinie ein Maximum aufweist.

2. Verwendung desVerfahrens gemäß Anspruch 1 zum Vereinzeln von Glassubstraten für Speichermedien, wobei die Trennlinie eine kreisförmige Trennlinie ist, die einen Außen- und/oder einem Innendurchmesser entspricht.

## Claims

1. A method for severing plate-shaped workpieces of mechanically brittle and nonmetallic materials along an arbitrary contour, comprising the following steps:
- scoring partition lines along the contour up to a depth T with the aid of a cutting device in at least one side of the plate-shaped workpiece,
**characterized in that**
- the plate-shaped workpiece is excited to bending vibrations at a resonant frequency having a vibration amplitude along the partition lines using a vibration generator, so that
- the plate-shaped workpiece is completely severed along the partition line,
- the bending tensions engaging at the crack being set via the vibration amplitudes of the vibration generator in such a way that these tensions allow a subcritical crack growth at a cracking speed of up to 1 mm/s, so that a complete partition of the workpiece is caused essentially perpendicularly to the surface of the workpiece and the vibration amplitude has a maximum in the area of the partition line.

2. A use of the method according to Claim 1 for isolating glass substrates for storage media, wherein the partition line is a circular partition line, which corresponds to an external and/or an internal diameter.

## Revendications

1. Procédé pour couper des pièces en forme de plaque en matériaux mécaniquement cassants et non métalliques le long d'un contour quelconque, comportant les pas suivants :
- graver les lignes de coupe le long des contours jusqu'à une profondeur T à l'aide d'un dispositif de coupe dans au moins une des faces de la pièce en forme de plaque,
**caractérisé en ce que**
- la pièce en forme de plaque est mise en vibration à une fréquence propre à une certaine amplitude de vibration le long des lignes de coupe à l'aide d'un générateur de vibrations, si bien que
- le long de la ligne de coupe, la pièce en forme de plaque soit coupée de part en part,
- les contraintes de flexion créées le long du tracé réalisé étant réglées par les amplitudes des vibrations du générateur de vibrations de manière à ce que ces contraintes permettent une croissance sous critique de la fissure à une vitesse de fissuration de jusqu'à 1 mm/s si bien qu'une coupe de part en part du matériau pratiquement perpendiculaire à la surface de la pièce soit effectuée et que l'amplitude des vibrations présente un maximum au niveau de la ligne de coupe.

2. Utilisation du procédé selon la revendication 1 pour couper des substrats de verre pour des moyens d'enregistrement, la ligne de coupe étant de forme circulaire, correspondant à un diamètre intérieur et/ou intérieur.
